# DEMANDE DE BREVET EUROPEEN

(11) **EP 0 847 013 A1**
(43) Date de publication de la demande: **10.06.1998**
(21) Numéro de dépôt: 97402957.1
(22) Date de dépôt: 05.12.1997
(51) Int. Cl.: G06F 15/02

(54) **Procédé et dispositif à fonction dédiée de conversion de valeur d'une devise à une autre devise, et ensemble de poche équipé d'un tel dispositif, formant support publicitaire**

(30) Priorité: 06.12.1996 FR 9615033
(71) Demandeur: Saletta, Gunnela, 75013 Paris (FR)
(72) Inventeur: Saletta, Gunnela, 75013 Paris (FR)
(74) Mandataire: Derambure, Christian

(57) **Abrégé**

L'invention concerne notamment un dispositif électronique (A) à fonction unique de conversion de valeur dans une devise en une autre devise, et inversement; destiné à être intégré à un ensemble de poche (B), tel que carte, formant support publicitaire;

Il comprend au moins une touche de chiffres (0-9), une touche de passage sous l'unité et/ou moyen de commande (E, F) tel actionné, il commande l'alimentation générale en énergie du dispositif (A) à l'arrêt, et affiche la valeur en mémoire (M; M') suite à l'exécution de la fonction ou de l'inverse.

## Description

L'invention concerne un procédé décimal de conversion monétique de valeur d'une devise à une autre devise, un dispositif électronique numérique de poche, à fonction unique.

Elle concerne aussi un ensemble de poche formant support publicitaire, tel que carte et apte à mettre en oeuvre ce procédé et équipé de ce dispositif.

Dans le domaine technique de l'invention, diverses techniques sont connues.

Ainsi, le document FR-A-2.412.120 décrit une mini-calculatrice comportant une unité de calcul équipée d'une entrée de données numériques, d'une entrée de fonction et d'une entrée d'effacement, une mémoire à programmation fixe, une mémoire dynamique ainsi qu'une unité d'affichage, pour l'inversion dans deux systèmes d'unités différents.

Le document WO-A-79.00.385 décrit une calculatrice de poche pour permettre des changements d'unités en plus d'autres opérations. Cette calculatrice comporte deux commutateurs à positions d'arrêt, deux boutons de déclenchement de calcul, ainsi que d'une alarme.

Le document EP-A-167.044 décrit une carte intelligente avec un clavier, une cellule solaire, un affichage et un composant à circuit intégré pour l'exécution d'opérations arithmétiques et d'identification. Le composant comprend une mémoire non volatile d'emmagasinage de données prédéterminées d'identification.

Le document EP-A-271.852 décrit un calculateur électronique avec des moyens pour empêcher d'entrer une donnée d'unité, immédiatement après l'entrée d'une donnée numérique suivie par une autre donnée d'unité.

Le document DE-A-36.14.288 décrit une machine électronique de calcul de change. Elle comporte une touche de programmation, une touche d'effacement et treize touches dont chacune est dédiée à l'affectation d'une valeur d'origine ou de change.

Le document DE-A-36.16.748 décrit aussi une machine de calcul de cours de devise.

Le document GB-A-2.207.263 décrit un calculateur de conversion de devise, avec plusieurs écrans d'affichage, six touches dédiées d'affectation, et deux touches, respectivement de mise à zéro et mise en marche.

Le document WO-A-92/05060 décrit un volumineux calculateur pour chariot de grande surface commerciale avec un espace publicitaire sur sa face supérieure.

Les structures décrites dans ces documents sont conçues pour exécuter plusieurs opérations et fonctions différentes pour leur utilisateur.

Elles sont donc relativement complexes et par conséquent coûteuses.

Notamment, elles ne résolvent pas les problèmes techniques évoqués maintenant.

Elles ne proposent pas d'un moyen simple, léger (quelques grammes) et peu encombrant (logeable en poche, dans un portefeuilles ou porte-cartes) de conversion d'une valeur d'une devise en une autre devise, et inversement.

Leur utilisation à cette fin est évidemment possible, mais implique:
- de nombreuses saisies et manipulations;
- une nouvelle saisie pour une conversion inverse;
- un risque d'erreurs et de confusions; et
- d'avoir à disposition une telle structure encombrante et/ou complexe, à tout instant utile (achat, visite, réunion ou analogues).

En outre, dans le cas d'une conversion de devise à fins professionnelles, il convient impérativement que le taux soit précisé à au moins 10⁻⁶, sous l'unité.

Un exemple de demande insatisfaite du public pour un dispositif de conversion palliant ces problèmes, est le passage à la monnaie unique dans l'Union Européenne.

En outre, leur coût ne permet pas une distribution gratuite et très large (adolescents, adultes, personnes âgées), économiquement compensée par la seule présence d'un signe ou message publicitaire sur l'ensemble, tel que carte, comprenant le dispositif numérique de conversion.

Du fait de la largeur du public de destination, les résultats de la conversion doivent être particulièrement lisibles.

Et le fonctionnement simplifié, indépendant de toute langue et quasiment intuitif.

Tandis que du fait de leur complexité, les structures connues offrent un espace disponible limité pour des signes ou messages publicitaires.

L'invention vise à résoudre ces problèmes notamment.

A cet effet, un premier objet de l'invention est un p procédé décimal de conversion monétique de valeur d'une devise à une autre devise.

Ce procédé est mis en oeuvre par un dispositif électronique à fonction dédiée et inversement, qui comprend sensiblement exclusivement et en combinaison: une source miniaturisée d'énergie; dix touches d'entrée de chiffres et une touche de passage sous l'unité; une mémoire numérique inscriptible, apte à enregistrer une valeur à partir des chiffres entrés via les touches, notamment; à enregistrer des données telles qu'un rapport de conversion entre deux devises à partir des chiffres entrés via les touches, et une fonction permanente de conversion telle que division ou multiplication; des moyens de traitement, tels que micro-contrôleur à horloge, aptes à exécuter la fonction de conversion par le rapport de la valeur enregistrée et à gérer un affichage, notamment; des moyens d'affichage permettant la visualisation de huit chiffres au plus, avec un signe de passage sous les unités tel que point flottant; des moyens de commande, tels qu'au plus deux touches d'exécution, aptes à provoquer l'exécution de la fonction, ou de l'inverse, ainsi que l'affichage de son résultat et/ou à permettre l'enregistrement du rapport de conversion; et un circuit de connexion tel que circuit imprimé.

Il comprend les étapes de conversion en séquence suivantes: presser la ou les touches de chiffres pour enregistrer la valeur à convertir; ensuite, presser la touche du taux choisi de destination; le résultat de la conversion étant alors automatiquement affiché, avec à gauche des moyens d'affichage un signe correspondant à la devise issue de la conversion.

Un deuxième objet de l'invention est un dispositif électronique à fonction unique de conversion de valeur dans une devise en une autre devise, et inversement; destiné à être intégré à un ensemble de poche, tel que carte, formant support publicitaire.

Ce dispositif comprend sensiblement exclusivement et en combinaison:
- une source miniaturisée d'énergie, telle que cellule photo-électrique et/ou accumulateur;
- dix touches d'entrée de chiffres, respectivement de 0 à 9, et une touche de passage sous l'unité;
- une mémoire numérique, volatile et inscriptible et/ou non volatile et inscriptible, apte à enregistrer une valeur à partir des chiffres entrés via les touches, notamment; à enregistrer des données telles qu'un rapport de conversion entre deux devises à partir des chiffres entrés via les touches, et une fonction permanente de conversion telle que division ou multiplication;
- des moyens de traitement, tels que micro-contrôleur, aptes à exécuter la fonction de conversion par le rapport de la valeur enregistrée et à gérer un affichage, notamment;
- des moyens d'affichage, tels qu'écrans à cristaux liquides, permettant la visualisation de huit chiffres au plus, avec un signe de passage sous les unités tel que point flottant;
- des moyens de commande, tels qu'au plus deux touches d'exécution, aptes à provoquer l'exécution de la fonction, ou de l'inverse, ainsi que l'affichage de son résultat et/ou à permettre l'enregistrement du rapport de conversion; et
- un circuit de connexion tel que circuit imprimé;
les moyens de traitement, touches de chiffres et/ou moyens de commande étant agencés afin qu'une touche de chiffre et/ou moyen de commande actionné, commande l'alimentation générale en énergie du dispositif à l'arrêt, et efface la valeur en mémoire suite à l'exécution de la fonction ou de l'inverse.

Selon une caractéristique, le dispositif comprend une source d'énergie constituée par une cellule photo-électrique.

Selon une autre caractéristique, le dispositif comporte une mémoire numérique, volatile et inscriptible apte à mémoriser une valeur à partir des chiffres entrés via les touches, notamment; et

une mémoire numérique non volatile et inscriptible, apte à mémoriser des données telles qu'un rapport de conversion entre deux devises à partir des chiffres entrés via les touches, et une fonction permanente de conversion telle que division ou multiplication.

Une caractéristique prévoit que les moyens de commande comportent exclusivement deux touches d'exécution.

Encore une autre caractéristique prévoit que les moyens de traitement, touches de chiffres et/ou moyens commande sont agencés afin qu'une touche quelconque de chiffre actionnée, commande l'alimentation générale en énergie du dispositif à l'arrêt, et qu'un moyen de commande quelconque actionné efface la valeur en mémoire suite à l'exécution de la fonction ou de l'inverse.

Un troisième objet de l'invention est un ensemble formant support publicitaire, tel que carte, équipé d'un dispositif électronique tel qu'évoqué.

L'ensemble comprend des moyens formant boîtier à l'intérieur duquel le dispositif est essentiellement agencé, avec deux faces principales dont au moins une, et par exemple les deux, présente une zone apte à recevoir un signe et/ou message notamment par sérigraphie ou analogues.

Selon une caractéristique, les moyens formant boîtier sont en matière synthétique rigide, les faces principales ayant des dimensions de l'ordre de 86 mm et 54 mm, tandis que transversalement ces faces sont distantes de sensiblement 2, 8 mm.

Selon encore une caractéristique, les touches de chiffres, les moyens de commande et d'affichage débouchent à une face principale de l'ensemble, l'autre face étant essentiellement occupée par une zone apte à recevoir un signe et/ou message notamment par sérigraphie ou analogues.

L'invention est exposée plus en détails dans la description qui suit de modes de réalisation non limitatifs, et qui se réfère aux dessins annexés.

La figure 1 est une vue en plan et partiellement en éclaté d'un ensemble formant support publicitaire et dispositif de conversion selon un premier mode de réalisation de l'invention.

La figure 2 est un schéma fonctionnel illustrant les étapes d'utilisation d'un dispositif de conversion selon l'invention.

Les figures 3 à 6 représentent un deuxième mode de réalisation de l'invention, et illustrent respectivement:
- une étape de saisie de valeur et éventuellement de mise sous tension;
- une étape de conversion par pression sur une touche de devise F correspondant à un taux de conversion;
- une étape inverse de retour à la devise initiale avec affichage de deux décimales;
- une étape de conversion par pression sur une autre touche de devise E correspondant à un autre taux de conversion.

La figure 7 est une vue de dessus en plan d'un demi-boîtier d'ensemble conforme à l'invention, en matière synthétique rigide de moulage injection nervurée, et pourvue de guidages de réception d'un tiroir de support et d'introduction d'une pile au lithium longue durée (par exemple 3 à 5 ans).

La figure 8 est une vue en plan d'un tiroir de support et d'introduction d'une pile dans un boîtier, en matière synthétique rigide de moulage injection, et pourvu de moyens de guidage et de verrouillage par agrafage élastique en position.

La figure 9 est une vue d'élévation transversale du demi-boîtier de la figure 7, et montrant de face une ouverture de réception du tiroir de support et d'introduction de la pile.

Sur les figures, la référence A désigne un dispositif électronique à fonction unique de conversion de valeur dans une devise en une autre devise, et inversement.

Le dispositif A est destiné à être intégré à un ensemble de poche B, tel que carte, formant support publicitaire.

Ce dispositif A dit dédié comprend sensiblement exclusivement:
- une source miniaturisée d'énergie C;
- dix touches d'entrée de chiffres, respectivement 0, 1, 2, 3, 4, 5, 6, 7; 8 et 9;
- une touche D de passage sous l'unité;
- une mémoire numérique M et/ou M';
- des moyens de traitement 10;
- des moyens d'affichage 11;
- des moyens de commande E, F et éventuellement G; et
- un circuit de connexion 12 tel que circuit imprimé.

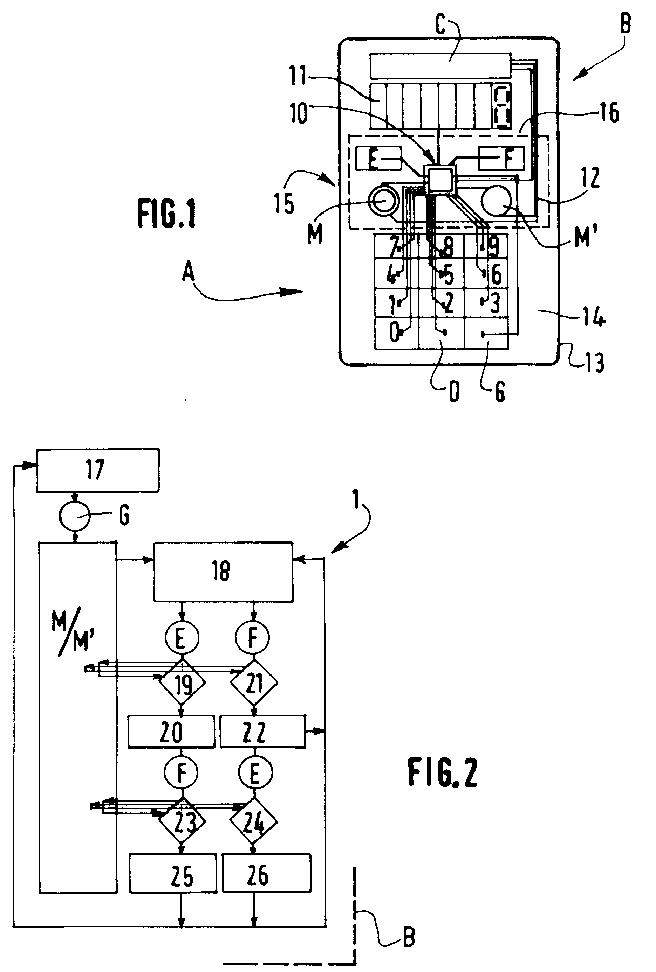

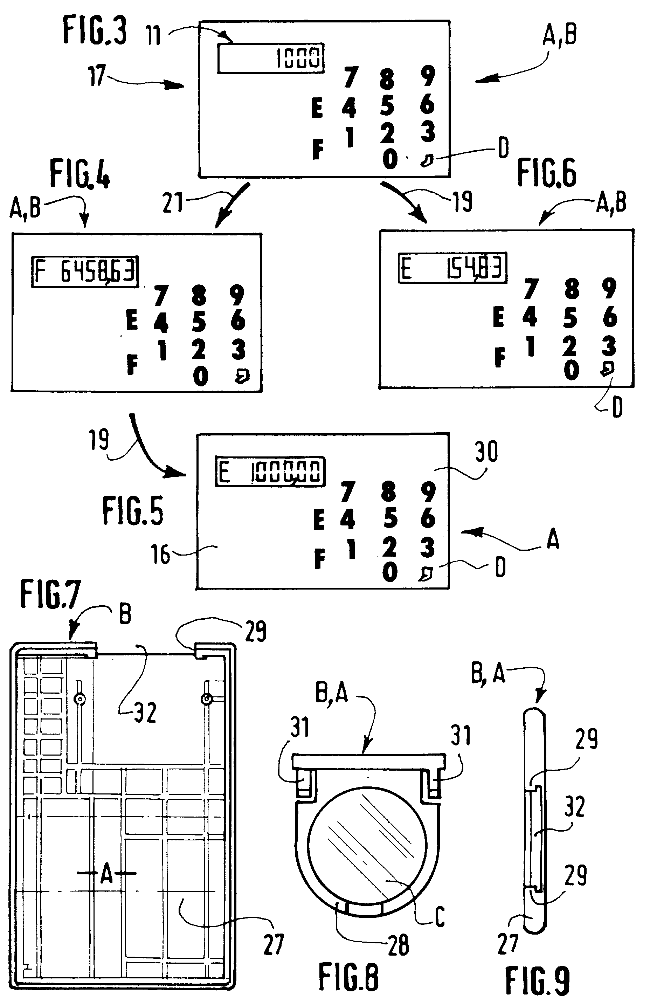

La source d'énergie C est sur la figure 1 une cellule photo-électrique. Dans les réalisations des figures 3 à 9, la source C est constituée par un accumulateur tel que pile plate. Une telle pile est prévue en complément ou remplacement de la cellule photo-électrique.

Les touches 0 à 9 d'entrée de chiffres et la touche D de passage sous l'unité sont ici des contacteurs masques sous un film souple et étanche de l'ensemble B. Certains modes de réalisation prévoient des contacteurs conventionnels, tels que pièces rapportées en matière synthétique, guidés à coulissement par rapport à des logements respectifs de l'ensemble B.

La mémoire M' est ici constituée par un composant mémorisant sous forme numérique, volatile tel que mémoire vive ou "RAM". La mémoire M' est apte à enregistrer une valeur à partir des chiffres entrés via les touches 0 à 9 et D. La mémoire M est quant à elle un composant mémorisant sous forme numérique, de manière non volatile des données. Il s'agit dans le mode de réalisation de la figure 1 d'un composant à mémoire morte inscriptible dit "EPROM". Elle est apte à mémoriser ou enregistrer un rapport de conversion entre deux devises, soit à partir des chiffres entrés via les touches 0 à 9 et D. Soit le rapport de conversion est enregistré préalablement, notamment avant l'acquisition du dispositif A par son utilisateur.

Une fonction permanente de conversion ici une division ou multiplication est également enregistrée, de manière permanente, dans la mémoire M.

Les moyens de traitement 10 sont ici un composant tels que micro-contrôleur ou micro-ordinateur dit "CPU". Le composant des moyens 10 est apte à exécuter la fonction de conversion par le rapport de la valeur enregistrée et à gérer l'affichage.

Les moyens 11 d'affichage sont ici un écran à cristaux liquides, permettant la visualisation de huit signes et/ou chiffres au plus, avec un signe de passage sous les unités tel que point flottant. La dimension de chaque chiffre affiché par les moyens 11 est dans une réalisation de l'ordre de 10 mm au moins suivant une direction. Cela assure une excellente lisibilité, par exemple par les personnes âgées.

Similairement, les touches de chiffres 0 à 9 et de commande E, F et G présentent des dimensions confortables, et sont donc pratiques. Par exemple, une dimension au moins d'une telle touche est de l'ordre de 8 mm.

Trois touches d'exécution E, F et G forment sur la figure 1 les moyens de commande. La touche E est apte à provoquer ou commander l'exécution de la fonction de conversion. Tandis que la touche F est quant à elle apte à provoquer ou commander l'exécution de la fonction de conversion inverse. Et la touche G permet l'enregistrement d'un rapport de conversion actualisé, et le changement de ce taux lorsqu'il subit une variation.

Lorsqu'une telle fonction ou enregistrement est effectué ou en cours, l'affichage correspondant est instantanément obtenu sur les moyens 11. Les moyens de traitement 10 et les touches de chiffres 0 à 9 sont ici agencés afin qu'en pressant ou activant une de ces touches, l'alimentation générale en énergie du dispositif A alors à l'arrêt soit commandée.

Le dispositif A passe alors d'un état de veille à un état actif, automatiquement.

Cela évite de prévoir une ou des touches supplémentaires de mise en marche et/ou d'arrêt.

Similairement, les moyens de traitement 10 et les touches des moyens de commande E, F et G sont agencés afin qu'en pressant ou activant une telle touche, la valeur affichée est effacée, suite à l'exécution de la fonction ou de l'inverse.

Lors de l'enregistrement d'une nouvelle valeur par les touche 0 à 9 et D, la valeur précédemment enregistrée est effacée.

Par le terme "effacer", on entend que la mémoire M' est remise à zéro. Cela évite aussi de prévoir une touche supplémentaire à cette fin.

Décrivons maintenant plus en détails l'ensemble B.

Ce dernier est ici sensiblement en forme de carte de crédit ou analogues. Ce format peu encombrant et usuel, est donc pratique à ranger. Il est ainsi aisé d'avoir sans cesse à disposition sur soi l'ensemble B.

Outre le dispositif électronique de conversion A tel qu'évoqué, l'ensemble B comprend des moyens 13 formant boîtier.

A l'intérieur du boîtier 13 est essentiellement agencé le dispositif A.

Seules les touches 0, 1, 2, 3, 4, 5, 6, 7, 8, 9, E, F, l'écran 11 et éventuellement G voire la cellule d'alimentation C sont donc visibles depuis l'extérieur du boîtier 13.

Ce dernier comporte deux faces principales dont seule la face dite supérieure 14 est visible. La face dite "inférieure" 15 est masquée par la face 14, sur la figure 1. Les deux faces 14 et 15 -éventuellement une seule 14 ou 15- présentent une zone d'inscription 16 apte à recevoir un signe et/ou message notamment par sérigraphie ou analogues. L'ensemble B présente, grâce aux zones 16, une étendue surfacique importante pour des inscriptions, d'ordre publicitaire, institutionnelles décorative ou analogues.

Dans le mode de réalisation de la figure 1, les faces principales ayant des dimensions de l'ordre de 86 mm et 54 mm, tandis que transversalement ces faces sont distantes de sensiblement 2, 8 mm.

Notons qu'ici, les touches de chiffres, les moyens de commande et d'affichage 11 débouchent à la face principale 14 de l'ensemble B. L'autre face est donc essentiellement occupée par une zone apte à recevoir un signe et/ou message notamment par sérigraphie ou analogues.

Cela en fait un support très visible, et donc attrayant du point de vue de la communication.

Ici, les moyens formant boîtier 13 sont en matière synthétique rigide.

La figure 7 est une vue de dessus en plan d'un demi-boîtier 27 de l'ensemble B conforme à l'invention, en matière synthétique rigide de moulage injection nervurée, et pourvue de guidages 29 de réception d'un tiroir 28 de support et d'introduction d'une pile C au lithium longue durée (par exemple 3 à 5 ans).

La figure 8 est une vue en plan du tiroir 28 de support et d'introduction d'une pile C dans un boîtier comportant le demi-boîtier 27 et un capot 30 (figure 5), également en matière synthétique rigide de moulage injection, et pourvu de moyens 31 de guidage et de verrouillage par agrafage élastique en position. Sur la figure 9 est représenté le demi-boîtier 27, une ouverture 32 complémentaire de réception du tiroir 28 de support et d'introduction de la pile C.

Décrivons en se reportant à la figure 2, le procédé de conversion suivant lequel fonctionne le dispositif A du premier mode de réalisation.

La case 17 illustre une entrée de rapport ou taux de change monétaire, par un utilisateur du dispositif A, au clavier constitué par les touches de chiffres 0 à 9 et de passage sous l'unité D. Au fur et à mesure de la saisie des chiffres, ceux-ci sont affichés.

En appuyant ensuite sur la touche G, le dispositif dirige et mémorise en tant que rapport les chiffres saisis.

La case 18 illustre une entrée de valeur (prix, solde, etc.) à convertir, par un utilisateur du dispositif A, également au clavier.

L'affichage correspondant est dans chaque cas commandé automatiquement. Il en va de même pour la mise en mémoire M'.

En pressant la touche E on provoque la conversion dans la devise souhaitée, à partir des chiffres saisis considérés par le dispositif A comme étant la valeur de départ.

De même, en pressant sur la touche F, la conversion à partir de la devise inverse, vers l'autre devise est commandée.

Ces étapes sont aisément comprises en considérant que la touche E se rapporte à des Francs (ou Dollars/$) et la touche E à des Euros (ou Livres/£).

La case 19 illustre une opération de division de la valeur affichée, par le rapport en mémoire M.

La case 21 illustre une opération de division de la valeur affichée, par le rapport.

Les cases 20 et 22 représentent les affichages correspondants de résultats de conversion. Les nouvelles valeurs affichées sont mises en mémoire M'.

Il est alors possible de procéder à une nouvelle saisie de valeur et/ou rapport.

Sinon, en pressant respectivement une touche F et E, après visualisation d'affichage en 20 et 22, une conversion inverse est chaque fois exécutée.

Par multiplication de la nouvelle valeur affichée, par le rapport en mémoire M dans le cas de la touche F, comme sur la case 23.

Et par division dans le cas de la touche E, comme sur la case 24.

Les mises en mémoire M' et affichage (11) correspondants- des valeurs initiales sensiblement- sont illustrés aux cases 25 et 26, respectivement.

Ici également, il est alors possible de procéder à une nouvelle saisie de valeur et/ou rapport.

Comme indiqué plus haut, chaque nouvelle saisie de valeur ou rapport provoque, lors de son attribution par une touche G, E ou F, l'effacement de la valeur préalablement affichée, automatiquement.

Le dispositif A reste apte à de telles étapes tant qu'il est alimenté en énergie par les moyens C.

Il est capable de convertir une valeur dans toute monnaie, en n'importe quelle autre monnaie.

En cas d'erreur dans la saisie d'une valeur, il suffit d'appuyer sur la touche E ou F indistinctement et d'entrer de nouveaux chiffre.

Le deuxième mode de réalisation des figures 3 à 9 est maintenant décrit, en utilisant pour les constituants similaires, des références numériques identiques.

Ce deuxième mode de réalisation se distingue du premier par les différences de simplification suivantes notamment:
- les moyens C comprennent une pile au lithium ou analogues, à la place de la cellule;
- lorsque la capacité d'affichage est insuffisante, des signes clignotants "-3" , "-6" et "-9" apparaissent à droite de l'écran 11, respectivement pour un rapport de multiplication de la valeur affichée par 10³, 10⁶ et 10⁹, tandis que toute action sur les touches est traduite par un affichage correspondant;
- la touche de taux G est supprimée, la fonction correspondante étant obtenue par une séquence spécifique de touches;
- afin d'éviter une érosion progressive d'une valeur initialement enregistrée, et d'un résultat de conversion affiché, ces valeur et résultat sont enregistrés en mémoire M ou M' pour sont utilisation dans une fonction inverse ultérieure;
- tout résultat différent d'une valeur entière, provoque un affichage avec deux chiffres sous l'unité, afin de respecter la règle des valeurs arrondies et en corollaire, l'impossibilité d'enregistrer une valeur à convertir ayant plus de deux chiffres après la décimale; par contre il est impératif qu'un taux enregistré comporte au moins six chiffres significatifs, ce taux étant enregistré dans une mémoire permanente insensibles aux arrêts, et au moins un taux dit "pivot" est ineffaçable;
- les conversions en cascades, par pression successive sur la même touche de taux E ou F, sont prohibés, afin d'éviter les erreurs;
- l'ergonomie de l'ensemble permet son utilisation d'une seule main, ce qui est particulièrement pratique pour une personne encombrée ou handicapée; et
- un signe indicateur de la devise du résultat, par exemple "E" comme sur la figure 5 ou 6, "F" comme sur la figure 4, est automatiquement affiché pour limiter le risque de confusion dans la conversion effectuée.

Il résulte de ces différences:
- des temps d'accès plus courts;
- un caractère universel du fait des taux programmables, ce qui est pratique pour un séjour à l'étranger;
- des risques d'erreur limités, par exemple du fait que l'affichage de la virgule est effectué exclusivement lorsque la touche D est pressée ou lorsqu'un résultat est affiché.

Les étapes de fonctionnement de ce deuxième mode de réalisation sont maintenant détaillées, en se reportant au figures 3 à 6.

L'entrée d'un taux de conversion en mémoire comprend les étapes en séquence suivantes: presser la touche 0 suivi d'une touche de taux d'origine E ou F, ce qui respectivement spécifie l'entrée d'un taux puis le taux choisi. Suite à ces étapes, les touches de chiffres sont pressées pour désigner la valeur du taux. Ici, au moins six touches de chiffres doivent être pressées pour que le taux soit enregistré, pour des raisons de sécurité et de précision. Enfin, est pressée la touche du taux de destination, résultat de la conversion F ou E, ce qui respectivement spécifie l'entrée de ce taux puis clos la séquence.

Un exemple de cette séquence est: "OE6.47000F". Ainsi, un taux d'une devise E vers une devise F de 6,47 est enregistré.

Dans le mode de réalisation, l'affichage 11 clignote quelques fois pour confirmer cet enregistrement.

Cette séquence supprime la nécessité d'une touche de programmation de taux, de sorte que le dispositif ne comporte ici que treize touches.

Le rappel d'un taux de conversion pivot en mémoire permanente comprend les étapes en séquence suivantes: presser la touche 0 suivi des touches de taux E et F, ce qui respectivement spécifie le rappel du taux pivot et provoque son affichage et son retour en taux actif. Un exemple de cet affichage est: "E6.47250F". Ainsi, un taux d'une devise E vers une devise F de 6,47250 est rappelé. Dans le mode de réalisation, l'affichage 11 clignote quelques fois pour confirmer ce rappel.

Une conversion monétique illustrée sur les figures 3 à 6 comprend les étapes en séquence suivantes: presser la ou les touches de chiffres pour enregistrer la valeur à convertir. Ensuite, est pressée la touche du taux choisi de destination, F pour l'étape 21 de la figure 4 et E pour l'étape 19 de la figure 6. Le résultat de la conversion F ou E, est automatiquement affiché, avec à gauche de l'écran le signe correspondant à la devise issue de la conversion.

Un exemple de cette séquence est: "1000" puis "F" (figure 4) ou "E" (figure 5), pour les affichages de résultats respectifs "F 6458,63" et "E 154.83". Ainsi, une conversion d'une devise E vers une devise F ou inversement, avec un taux de 6,45869 est effectué rapidement et sans risque d'erreur.

En cas d'erreur, une pression sur une touche de taux E ou F efface une valeur enregistrée précédemment et affichée. Cela permet de supprimer la touche "EFFACE" des dispositifs connus.

La mise hors tension du dispositif A est effectuée automatiquement, après écoulement d'un temps prédéterminé mesuré par l'horloge des moyens de traitement 10, en l'absence de toute pression de touche. Par exemple, ce temps est de l'ordre de trente secondes.

La remise en tension est effectuée par pression sur l'une des touches 0 à 9, D, E ou F. L'affichage correspondant est automatiquement effectué et prise en compte pour le fonctionnement ultérieur du dispositif A.

## Revendications

1. Procédé décimal de conversion monétique de valeur d'une devise à une autre devise, par un dispositif (A) électronique à fonction dédiée et inversement, qui comprend sensiblement exclusivement et en combinaison: une source miniaturisée d'énergie (C); dix touches d'entrée de chiffres (0-9) et une touche de passage sous l'unité (D); une mémoire numérique inscriptible (M'; M), apte à enregistrer une valeur à partir des chiffres entrés via les touches, notamment; à enregistrer des données telles qu'un rapport de conversion entre deux devises à partir des chiffres entrés via les touches, et une fonction permanente de conversion telle que division ou multiplication; des moyens de traitement (10), tels que micro-contrôleur à horloge, aptes à exécuter la fonction de conversion par le rapport de la valeur enregistrée et à gérer un affichage, notamment; des moyens d'affichage (11) permettant la visualisation de huit chiffres au plus, avec un signe de passage sous les unités tel que point flottant; des moyens de commande (E, F), tels qu'au plus deux touches d'exécution, aptes à provoquer l'exécution de la fonction, ou de l'inverse, ainsi que l'affichage de son résultat et/ou à permettre l'enregistrement du rapport de conversion; et un circuit (12) de connexion tel que circuit imprimé; caractérisé en ce qu'il comprend les étapes de conversion en séquence suivantes: presser la ou les touches de chiffres (0-9; D) pour enregistrer la valeur à convertir; ensuite, presser la touche du taux choisi de destination (F ou E); le résultat de la conversion étant alors automatiquement affiché, avec à gauche des moyens d'affichage (11) un signe (F ou E) correspondant à la devise issue de la conversion.

2. Procédé selon la revendication 1, caractérisé en ce que l'entrée d'un taux de conversion en mémoire comprend les étapes en séquence suivantes: presser une touche d'entrée de chiffre (0) suivi d'une touche de taux d'origine (E ou F), ce qui respectivement spécifie l'entrée d'un taux puis le taux choisi; ensuite au moins une touche de chiffres et éventuellement de passage (D) est pressée pour désigner la valeur du taux; enfin, est pressée la touche du taux de destination (F ou E), ce qui respectivement spécifie l'entrée de ce taux puis clos la séquence.

3. Procédé selon la revendication 1 ou 2, caractérisé en ce qu'en cas d'erreur, une pression sur une touche de taux (E ou F) efface une valeur enregistrée précédemment et affichée.

4. Dispositif (A) électronique à fonction unique de conversion de valeur dans une devise en une autre devise, et inversement; apte à mettre en oeuvre le procédé selon l'une des revendications 1 à 3 et destiné à être intégré à un ensemble (B) de poche, tel que carte, formant support publicitaire, caractérisé en ce qu'il comprend sensiblement exclusivement et en combinaison: une source miniaturisée d'énergie (C), telle que cellule photo-électrique et/ou accumulateur; dix touches d'entrée de chiffres (0-9) et une touche de passage sous l'unité (D); une mémoire numérique, volatile et inscriptible (M') et/ou non volatile et inscriptible (M), apte à enregistrer une valeur à partir des chiffres entrés via les touches, notamment; à enregistrer des données telles qu'un rapport de conversion entre deux devises à partir des chiffres entrés via les touches, et une fonction permanente de conversion telle que division ou multiplication; des moyens de traitement (10), tels que micro-contrôleur, aptes à exécuter la fonction de conversion par le rapport de la valeur enregistrée et à gérer un affichage, notamment; des moyens d'affichage (11), tels qu'écrans à cristaux liquides, permettant la visualisation de huit chiffres au plus, avec un signe de passage sous les unités tel que point flottant; des moyens de commande (E, F, G), tels qu'au plus deux ou trois touches d'exécution, aptes à provoquer l'exécution de la fonction, ou de l'inverse, ainsi que l'affichage de son résultat et/ou à permettre l'enregistrement du rapport de conversion; et un circuit (12) de connexion tel que circuit imprimé;les moyens de traitement, touches de chiffres et/ou moyens commande étant agencés afin qu'une touche de chiffre et/ou moyen de commande actionné, commande l'alimentation générale en énergie du dispositif à l'arrêt.

5. Dispositif (A) selon la revendication 4, caractérisé en ce qu'il comprend une source miniaturisée d'énergie (C) constituée par une cellule photo-électrique.

6. Dispositif (A) selon l'une des revendications 4 ou 5, caractérisé en ce qu'il comporte une mémoire numérique, volatile et inscriptible (M') apte à mémoriser une valeur à partir des chiffres entrés via les touches (0-9; D), notamment; et une mémoire numérique non volatile et inscriptible (M), apte à mémoriser des données telles qu'un rapport de conversion entre deux devises à partir des chiffres entrés via les touches, et une fonction permanente de conversion telle que division ou multiplication.

7. Dispositif (A) selon l'une des revendications 4 à 6, caractérisé en ce que les moyens de commande comportent exclusivement trois touches d'exécution (E, F, G).

8. Dispositif (A) selon l'une des revendications 4 à 7, caractérisé en ce que les moyens de traitement (10), touches de chiffres et de passage (0-9; D) et/ou moyens commande (E, F, G) sont agencés afin qu'une touche quelconque de chiffre actionnée, commande l'alimentation générale en énergie du dispositif à l'arrêt, et qu'un moyen de commande quelconque actionné efface la valeur en mémoire (M; M') suite à l'exécution de la fonction ou de l'inverse.

9. Ensemble (B) formant support publicitaire, tel que carte, équipé d'un dispositif électronique (A) selon l'une des revendications 4 à 8, caractérisé en ce qu'il comprend des moyens (13) formant boîtier à l'intérieur duquel le dispositif (A) est essentiellement agencé, avec deux faces principales (14, 15) dont au moins une, et par exemple les deux, présentent une zone (16) apte à recevoir un signe et/ou message notamment par sérigraphie ou analogues.

10. Ensemble (B) selon la revendication 9, caractérisé en ce que les moyens formant boîtier (13) sont en matière synthétique rigide, les faces principales (14, 15) ayant des dimensions de l'ordre de 86 mm et 54 mm, tandis que transversalement ces faces sont distantes de sensiblement 2,8 mm.

11. Ensemble (B) selon la revendication 9 ou 10, caractérisé en ce que les touches de chiffres, les moyens de commande et d'affichage débouchent à une face principale (14) de l'ensemble, l'autre face (15) étant essentiellement occupée par une zone (16) apte à recevoir un signe et/ou message notamment par sérigraphie ou analogues.
